# EUROPEAN PATENT APPLICATION

(11) **EP 3 028 932 A1**
(43) Date of publication of application: **08.06.2016**
(21) Application number: 13890609.4
(22) Date of filing: 31.10.2013
(51) Int. Cl.: B62K 19/30

(54) **ROUTING STRUCTURE OF FOLDING BICYCLE**

(30) Priority: 01.08.2013 CN 201320466879 U
(71) Applicant: Dahon Technologies, Ltd., Shenzhen, Guangdong 518125 (CN)
(72) Inventor: WANG, Hai, Shenzhen Guangdong 518125 (CN); HUANG, Dongming, Shenzhen Guangdong 518125 (CN); HON, David Tak-Wei, Shenzhen Guangdong 518125 (CN)
(74) Representative: Herrero & Asociados
(86) International application number: PCT/CN2013/086296
(87) International publication number: WO 2015/014035

(57) **Abstract**

Disclosed is a routing structure of a folding bicycle, comprising: a control line (1) for controlling the running state of said bicycle, a front frame provided with a front folding connector (21), and a rear frame provided with a rear folding connector (31); said front frame and said rear frame are hinged to be folded together through the front folding connector (21) and the rear folding connector (31); a fist through-hole (211) is disposed on the front folding connector (21), a second through-hole (311) is disposed on the rear folding connector (31); a protective sleeve (5) is passed through and fixed in said first through-hole (211) and said second through-hole (311); said control line (1) is disposed through said first through-hole (211), said second through-hole (311) and said protective sleeve (5); a latching portion (6) is fixed on said control line (1), and said latching portion (6) is disposed to correspond to an end of said protective sleeve (5) to perform a position-limiting function, said end of the protective sleeve (5) is the one disposed through the first through-hole (211). When the front folding connector (21) and the rear folding connector (31) are disengaged or engaged, the two ends of the protective sleeve are disposed in the first through-hole and the second through-hole respectively. The protective sleeve can protect the control line, avoid the wearing of the control line, and prevent the control line from protruding out of the folding connectors, so that the bicycle can be folded more smoothly.

## Description

### TECHNICAL FIELD

The present disclosure relates to a routing structure of a bicycle, more particularly, to a routing structure of a folding bicycle.

### BACKGROUND

As a bicycle has more and more auxiliary functions, more and more control lines are needed, such as brake lines, gearshift lines and other electrical control lines. The arrangement of various control lines relates to the riding safety of the bicycle and the protection level for control lines, therefore, it is critical to suitably arrange various control lines. In most of the routing arrangements, the control lines are disposed inside the frame tube of the bicycle, while in a folding bicycle, the front folding connector and the rear folding connector are frequently opened and closed, and thus the control lines are pulled, and the control lines on the front frame or the rear frame are moved. The control lines protrude out of the rear frame when moving towards the rear frame; as the protruding portion of the control lines is too long, the control lines easily rub against the bicycle wheel, or easily hook on other objects when the bicycle is running, causing the bicycle tripped over, which will affect the bicycle riding safety; sometimes, the control lines protrude out of the folding connector when moving towards the folding connector, as a result, the folding connector cannot be folded, which will affect the folding of the bicycle.

### SUMMARY

The objective of the present disclosure is to provide a routing structure of a folding bicycle, which has a suitable routing arrangement, high safety and facilitates the bicycle to be folded smoothly.

The present disclosure is realized by the following schemes:
A routing structure of a folding bicycle comprises: a control line for controlling the running state of the bicycle, a front frame provided with a front folding connector, and a rear frame provided with a rear folding connector; said front frame and said rear frame are hinged to be folded together through the front folding connector and the rear folding connector; a fist through-hole is disposed on the front folding connector, and a second through-hole is disposed on the rear folding connector; wherein a protective sleeve is passed through and fixed in said first through-hole and said second through-hole; said control line is disposed through said first through-hole, said second through-hole and said protective sleeve; a latching portion is fixed on said control line, and said latching portion is disposed to correspond to an end of said protective sleeve to perform a position-limiting function, said end of the protective sleeve is the one disposed through the first through-hole.

Specifically, said protective sleeve has a fixing portion, said fixing portion is connected with said front folding connector or said rear folding connector.

Specifically, a first routing hole in communication with an inner cavity of said front frame is disposed on said front frame, a second routing hole in communication with an inner cavity of said rear frame is disposed on said rear frame, one end of said control line extends out of said first routing hole, the other end of said control line extends out of said second routing hole.

Specifically, said rear frame includes an intermediate arm, said second routing hole is disposed on the lower end of said intermediate arm, said rear frame also includes a rear fork, whose inner cavity is communicated with the inner cavity of said intermediate arm, said second routing hole is disposed on one side of said rear fork.

Specifically, said protective sleeve is a spring tube, said latching portion is a fastening band.

Specifically, said first routing hole and said second routing hole are provided with a wire-protecting jacket respectively, said control line is disposed through said wire-protecting jackets.

Specifically, said control line includes a brake line and a gearshift line.

The present disclosure has the following advantages: a protective sleeve is passed through and fixed in the first through-hole and second through-hole, the control line is disposed through said first through-hole, said second through-hole and said protective sleeve, therefore, when the folding bicycle is unfolded and folded, the two ends of protective sleeve are fixed in first through-hole and second through-hole respectively, which can prevent control lines and folding connectors from rubbing with each other so as to protect the control lines and avoid the wearing of the control lines; and can prevent the control lines from being prolonged and protruding out of the folding connector when folding, which will cause the folding connector unable to be folded, and thus the present disclosure can make the folding more smoothly. A latching portion is fixed on the control lines, and the latching portion is disposed to correspond to an end of the protective sleeve, the latching portion can only abut against the end of the protective sleeve or be positioned at a suitable distance from the end of the protective sleeve; when the latching portion contacts with the end of the protective sleeve, the latching portion cannot pass through the protective sleeve, hence, the control lines disposed in the protective sleeve cannot protrude out of the rear frame when folding; when the latching portion is positioned at a suitable distance from the end of the protective sleeve, the control lines are allowed to move towards the front frame properly, thus the protruding portion of the control line out of the rear frame will not exceed the safety length as originally designed, the control lines will not easily rub against the bicycle wheel, and will not easily hook on other objects when the bicycle is running, and will not cause the bicycle tripped over. The present disclosure has suitable structure and high safety.

### BRIEF DESCRIPTION OF THE DRAWINGS

Fig. 1 is a schematic structural diagram illustrating the control lines disposed through the front frame and the rear frame according to the present disclosure;
Fig. 2 is an enlarged view of the area A shown in Fig.1;
Fig.3 is a schematic structural diagram illustrating the protective sleeve according to the present disclosure;
Fig.4 is a schematic structural diagram illustrating the fixing portion of the protective sleeve according to the present disclosure, wherein the fixing portion is fixed on the front folding connector;
Fig.5 is another schematic structural diagram illustrating the control lines disposed through the front frame and the rear frame according to the present disclosure.

### DETAILED DESCRIPTION OF THE PREFERRED EMBODIMENTS

The present disclosure will be described in more details with reference to the accompanying figures.

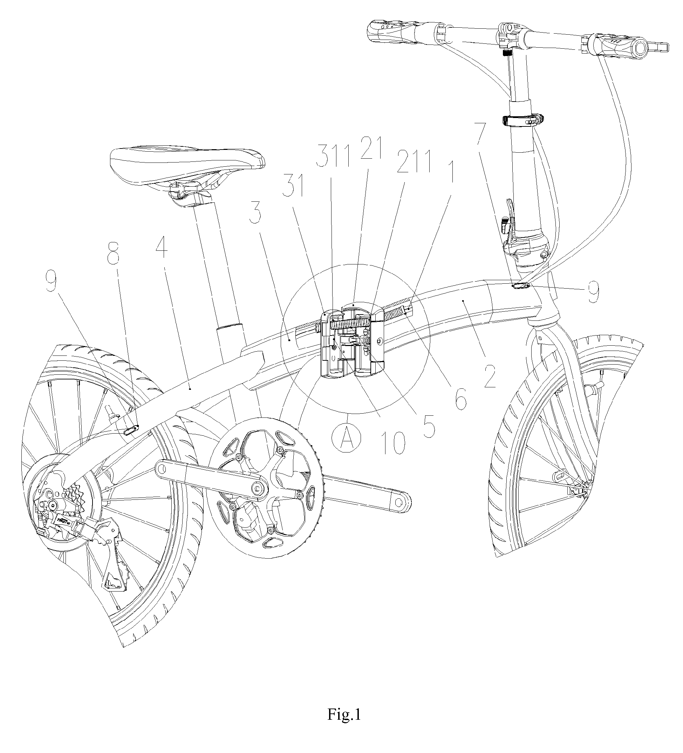

Embodiments: As shown in Figs. 1 to 4, the routing structure of the folding bicycle comprises a front frame, a rear frame, and control lines 1 for controlling the running state of the bicycle. The control lines 1 include brake lines and gearshift lines, the control line 1 may include control lines for controlling other components of the bicycle. The front frame includes a front arm 2, one end of the front arm 2 is connected with a front folding connector 21 by welding or casting, the other end of the front arm 2 is connected with a head tube by welding or casting. The rear frame includes an intermediate arm 3 and a rear fork 4; one end of the intermediate arm 3 is connected with a rear folding connector 31 by welding or casting, the other end of the intermediate arm 3 is connected with an intermediate tube and the rear fork 4 by welding, and the inner cavity of the intermediate arm 3 is connected and communicated with the inner cavity of the rear fork 4; alternatively the inner cavity of the intermediate arm 3 and the inner cavity of rear fork 4 are communicated with each other in other manners according to the routing structure. The front frame and rear frame are hinged to be folded together through the front folding connector 21 and rear folding connector 31. A first through-hole 211 is disposed on the front folding connector 21, and the first through-hole 211 is communicated with the inner cavity of the front arm 2; a second through-hole 311 is disposed on the rear folding connector 31, and the second through-hole 311 is communicated with the inner cavity of the intermediate arm 3.

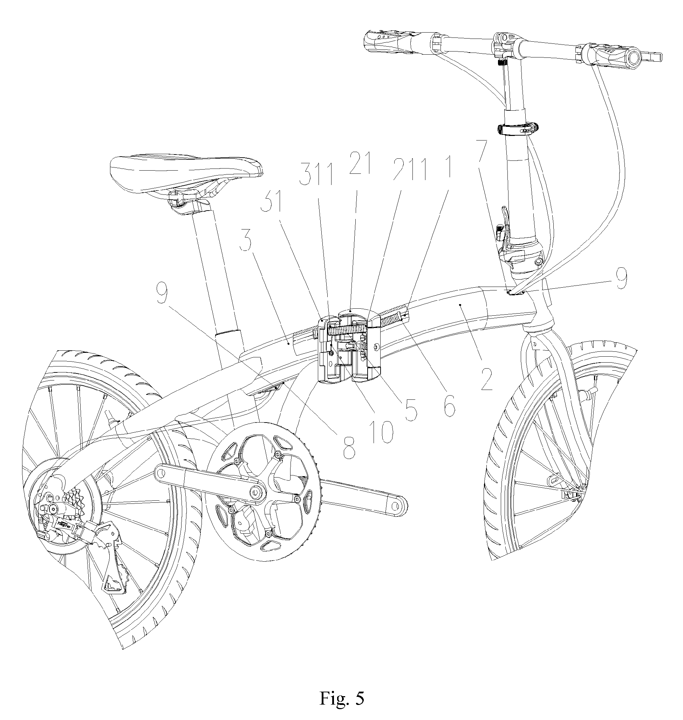

A first routing hole 7 in communication with the inner cavity of the front arm 2 is disposed on one side of the front arm 2, and the first routing hole 7 is sheathed with a wire-protecting jacket 9. Alternatively, the first routing hole 7 may be disposed at other positions of the front arm 2, for example, the first routing hole 7 may be disposed at the bottom of the front arm 2, or at each of the two sides of the front arm 2, and so on. The inner cavity of the intermediate arm 3 is communicated with the inner cavity of the rear fork 4, so that the control lines 1 can be hidden inside the tube of the rear fork 4 through the inner cavities. The rear fork 4 includes a left rear fork and a right rear fork; one second routing hole 8 is disposed on one side of the left rear fork and another second routing hole 8 is disposed on one side of the right rear fork, and each second routing hole 8 is sheathed with a wire-protecting jacket 9. It is beneficial for suitably routing the control lines by disposing the second routing hole 8 on one side of the rear fork 4. Alternatively, the second routing holes 8 may be disposed at other positions of the rear fork 4, for example, the second routing hole 8 may be disposed at the top of the side of the rear fork 4, or at the bottom of the rear fork 4, and so on. In this embodiment, the second routing hole 8 may alternatively be hidden at the bottom of the intermediate arm 3, as shown in Fig. 5. The wire-protecting jacket 9 is configured to prevent the control lines 1 from being worn off by the first routing hole 7 or by the second routing hole 8, and to fix control lines 1. The wire-protecting jacket 9 may be provided with several cable holes for routing the control lines 1.

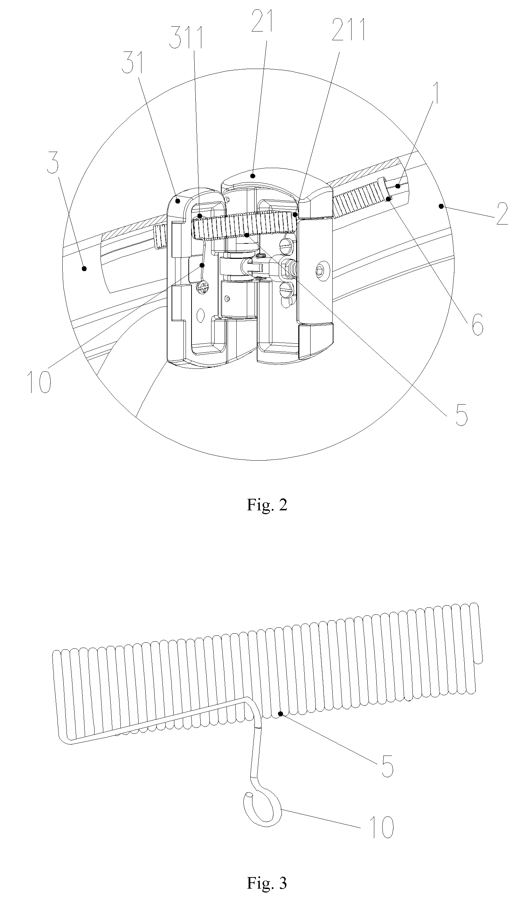

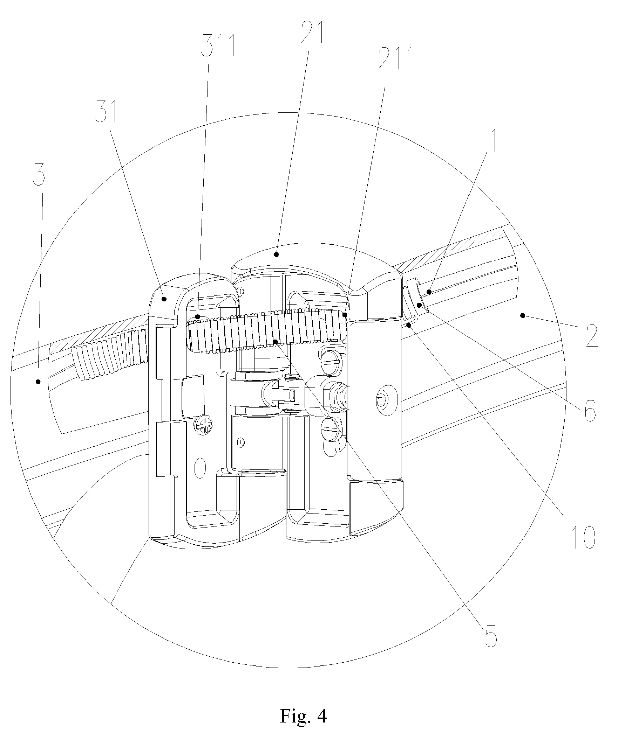

A protective sleeve 5 is passed through and fixed in the first through-hole 211 and the second through-hole 311, a latching portion 6 is sleeved and fixed on the control lines 1, the latching portion 6 is disposed to correspond to the end of the protective sleeve 5 so as to perform a position-limiting function, said end of the protective sleeve 5 is the one disposed through the first through-hole 211, that is, when the control lines 1 move, the latching portion 6 can only abut against the end of the protective sleeve 5 or be positioned at a suitable distance from the end of the protective sleeve 5; when the control lines 1 are pulled, the latching portion 6 can abut against the end of the protective sleeve and prevent the control lines 1 from moving towards the rear frame. In this embodiment, the latching portion 6 is embodied as a fastening band, which has a low cost and is easy to install and handle; the latching portion 6 may be embodied as other clamping parts, such as an iron-wire fixing part, a collar fixing part, and so on. The protective sleeve 5 has a fixing portion, the fixing portion is fixedly connected with the front folding connector 21 or the rear folding connector 31. In this embodiment, one end of the protective sleeve 5 is fixed in the second through-hole 311, the other end of the protective sleeve 5 passes through the first through-hole 211 with the latching portion 6 correspondingly arranged at this end, as shown in Fig. 2; alternatively, one end of the protective sleeve 5 is fixed in the first through-hole 211 with the latching portion 6 correspondingly arranged at this end, the other end of the protective sleeve 5 is disposed in the second through-hole 311, as shown in Fig. 4.

As shown in Fig.1, one end of the control lines 1 passes through the protective sleeve 5, the second through-hole 311, the inner cavity of the intermediate arm 3 and the rear fork 4, then extends out of the wire-protecting jacket 9 sheathed in the second routing hole 7 disposed on the rear fork 4, and is connected with the derailleur and the brake; the other end of the control lines 1 passes through the first through-hole 211 and the inner cavity of the front arm 2, then extends out of the wire-protecting jacket 9 sheathed in the first routing hole 7 disposed on the front arm 2, and is connected with the control device. When the control lines 1 are pulled towards the rear frame, the latching portion 6 abuts against the end of the protective sleeve 5, said end of the protective sleeve 5 is the one disposed through the first through-hole 211, and the control lines 1 are prevented from moving towards the rear frame, so that the protruding portion of the control lines will not exceed the safety length as originally designed, the control lines will not rub against the bicycle wheel, or hook on other objects when the bicycle is running, and the bicycle will not be tripped over, and thus the present disclosure has high safety and suitable structure. The protective sleeve 5 is bendable, and can be deformed when folding, which is beneficial for folding the bicycle; when the bicycle frame is unfolded, the protective sleeve 5 is bent, as the protective sleeve 5 is passed through and fixed in the first through-hole 211 and the second through-hole 311, the position of the protective sleeve is unchangeable, and the two ends of the protective sleeve are always disposed through the first through-hole 211 and the second through-hole 311 respectively, the protective sleeve 5 will not move and protrude outwards; the control lines 1 are disposed through the protective sleeve 5, so that the control lines 1 can be protected, and the protective sleeve 5 can prevent the control lines 1 from being worn off and can guide the control lines to move along the axial direction of the protective sleeve 5. In this embodiment, the protective sleeve 5 is embodied as a spring tube, as shown in Fig. 3, the fixing portion is the tail end 10 of the spring tube, the tail end 10 of the spring tube is fixed on the rear folding connector 31 through screw-fixation. Alternatively, the tail end 10 of the spring tube is fixed on the front folding connector 21 through screw-fixation, as shown in Fig. 4. As the spring tube has certain elastic restoring ability, when the bicycle frame is unfolded, the spring tube is bent and restoring force is generated; when the bicycle frame is folded, the restoring force of the spring tube facilitates to restore the original state of the spring tube, and the spring tube will not protrude outwards and will not influence the folding of the bicycle. Alternatively, the protective sleeve 5 may be embodied as other tubes which have certain flexibility and elasticity, such as plastic tube with elasticity, and so on. When the bicycle is unfolded or folded, since the control lines are disposed through the protective sleeve 5, the control lines 1 are prevented from rubbing with the folding connectors, which can avoid the wearing of the control lines 1, and can prevent the control lines from being prolonged and protruding out of the folding connectors when folding, which will cause the folding connector unable to be folded, while the present disclosure can make the folding more smoothly.

What described above are preferred embodiments of the present invention, but not intended to limit the scope of the present invention. Any modification, equivalent replacement, improvement and so on made according to the spirit and principle of the present invention shall be included within the protection scope of the present invention.

## Claims

1. A routing structure of a folding bicycle, comprising: a control line (1) for controlling the running state of the bicycle, a front frame provided with a front folding connector (21), and a rear frame provided with a rear folding connector (31); said front frame and said rear frame are hinged to be folded together through the front folding connector (21) and the rear folding connector (31); a fist through-hole (211) is disposed on the front folding connector (21), and a second through-hole (311) is disposed on the rear folding connector (31); **characterized in that**, a protective sleeve (5) is passed through and fixed in said first through-hole (211) and said second through-hole (311); said control line (1) is disposed through said first through-hole (211), said second through-hole (311) and said protective sleeve (5); a latching portion (6) is fixed on said control line (1), and said latching portion (6) is disposed to correspond to an end of said protective sleeve (5) to perform a position-limiting function, said end of the protective sleeve (5) is the one disposed through the first through-hole (211).

2. The routing structure of a folding bicycle according to claim 1, **characterized in that**, said protective sleeve (5) has a fixing portion, said fixing portion is connected with said front folding connector or said rear folding connector.

3. The routing structure of a folding bicycle according to claim 1, **characterized in that**, a first routing hole (7) in communication with an inner cavity of said front frame is disposed on said front frame, a second routing hole (8) in communication with an inner cavity of said rear frame is disposed on said rear frame, one end of said control line (1) extends out of said first routing hole (7), the other end of said control line (1) extends out of said second routing hole (8).

4. The routing structure of a folding bicycle according to claim 3, **characterized in that**, said rear frame includes an intermediate arm (3), said second routing hole (8) is disposed at a bottom of said intermediate arm (3).

5. The routing structure of a folding bicycle according to claim 3, **characterized in that**, said rear frame further includes a rear fork (4), said rear fork (4) has an inner cavity in communication with an inner cavity of said intermediate arm (3), said second routing hole (8) is disposed on one side of said rear fork (4).

6. The routing structure of a folding bicycle according to any one of claims 1-5, **characterized in that**, said protective sleeve (5) is a spring tube, said latching portion (6) is a fastening band.

7. The routing structure of a folding bicycle according to claim 6, **characterized in that**, said first routing hole (7) and said second routing hole (8) are provided with a wire-protecting jacket (9) respectively, said control line (1) is disposed through said wire-protecting jackets (9).

8. The routing structure of a folding bicycle according to claim 6, **characterized in that**, said control line (1) includes a brake line and a gearshift line.
